# EUROPÄISCHE PATENTANMELDUNG

(11) **EP 1 897 736 A2**
(43) Veröffentlichungstag der Anmeldung: **12.03.2008**
(21) Anmeldenummer: 07015444.8
(22) Anmeldetag: 07.08.2007
(51) Int. Cl.: B60J 7/20

(54) **Anordnung eines Verdeckkastendeckels an einem Kraftfahrzeug**

(30) Priorität: 08.09.2006 DE 102006042285
(71) Anmelder: Dr.Ing. h.c. F. Porsche Aktiengesellschaft, 70435 Stuttgart (DE)
(72) Erfinder: Fröschle, Mathias, 73760 Ostfildern (DE); Czechtizky, Timo, 73119 Zell u. A. (DE)

(57) **Zusammenfassung**

Anordnung eines Verdeckkastendeckels an einem Kraftfahrzeug, der einem heckseitigen Aufnahmeraum zur Unterbringung eines abgelegten Verdecks zugeordnet ist, wobei der Verdeckkastendeckel das abgelegte Verdeck teilweise abdeckt. Der Verdeckkastendeckel ist dabei gelenkig vor der Heckklappe direkt an der Karosserie angeordnet ist und weist in Richtung der Fahrzeugquerachse eine geringere Ausdehnung auf als das Verdeck. Der Verdeckkastendeckel erstreckt sich dabei über einen Teilbereich des abgelegten Verdecks.

## Beschreibung

Die vorliegende Erfindung betrifft eine Anordnung eines Verdeckkastendeckels an einem Kraftfahrzeug, welcher einen heckseitigen Aufnahmeraum zur Unterbringung eines abgelegten Verdecks abdeckt.

Fahrzeugverdecke werden bei geöffneten Fahrzeugverdeck gewöhnlicherweise in einem hinter dem Fahrgastraum angeordneten Verdeckkasten untergebracht. Dieser Verdeckkasten ist bei den meisten Fahrzeugen sowohl bei geöffnetem als auch bei geschlossenem Verdeck abgedeckt.

Die Verdeckkastendeckel, welche zur Erfüllung dieser Abdeckfunktion dienen, sind bei den verschiedenen bekannten Verdecksystemen unterschiedlich gestaltet. So sind zum einen Verdecksysteme mit einem großen Verdeckkastendeckel bekannt, die bei geöffnetem (das Verdeck ist im Verdeckkasten abgelegt) sowie bei geschlossenem Verdeck dem gesamten Verdeckkasten abdecken. Dabei reichen sie bis an die Rückenlehnen der hinteren Fahrzeugsitze heran. Bei geschlossenem Verdeck sind diese Verdeckkastendeckel damit Teil des Fahrgastraums, in dem sie beispielsweise die Funktion der Hutablage übernehmen.

Weiterhin sind Verdecksysteme bekannt, welche auf einen Verdeckkastendeckel, der Teil der Fahrzeugkarosserie ist, verzichten. Dabei ist das abgelegte Verdeck beispielsweise so gestaltet, dass es selbst die Funktion der Verdeckkastenabdeckung übernimmt. Eine weitere Möglichkeit, die aus gestalterischen Gründen weit häufiger zur Einsatz kommt, ist die Abdeckung des abgelegten Verdecks durch eine so genannte Persenning, welche zumeist aus einem flexiblen, lederähnlichem Material besteht.

Ferner sind auch Verdecksysteme bekannt, welche einen halben Verdeckkastendeckel umfassen, der an ein, bei offenem Fahrzeug sichtbares, Element des abgelegten Verdecks anschließt. Dabei liegt der Verdeckkastendeckel zumeist am abgelegten vorderen Dachbereich des Verdecks an und erstreckt sich um dieses U-förmig herum. Der Verdeckkastendeckel umfasst also auch den seitlichen Bereich bis zur Vorderkante des Verdeckkastens, indem ein Großteil des Faltgestänges des Verdecks untergebracht ist.

Bei den Verdecksystemen, welche auf einen Verdeckkastendeckel verzichten, ist das äußere Erscheinungsbild des Fahrzeugs, insbesondere bei sportlichen Fahrzeugen die "klare Linie" beeinträchtigt. Auch das erforderliche Aufbringen der Persenning von Hand stellt einen Nachteil dieser System dar.

Verdecksysteme mit großem Verdeckkastendeckel, der über den ganzen Verdeckkasten reicht, erfordern zur Bewegung dieses großen Karosserieteils relativ komplexe und robuste Führungsgestänge. Dies gilt umso mehr, wenn ein Öffnen oder Schließen des Verdecks während der Fahrt erfolgen soll. Diesen Nachteil weisen auch Verdecksysteme mit halben Verdeckkastendeckel auf, jedoch in weniger stark ausgeprägter Form, da diese Verdeckkastendeckel vergleichsweise kleiner ausgeführt sind. Allerdings ist hier ein zusätzlicher mechanischer und kinematischer Aufwand zur Führung und Verriegelung in den sich seitlich in Fahrtrichtung nach vorne erstreckenden Bereichen erforderlich.

Die vorliegende Erfindung stellt sich die Aufgabe, eine Anordnung eines Verdeckkastendeckels an einem Kraftfahrzeug zur Verfügung zu stellen, welche den mechanischen Aufwand zur Führung und Verriegelung des Verdeckkastendeckels vereinfacht und dabei eine auf das Fahrzeugdesign abgestimmte Gestaltung der Verdeckkastenabdeckung ermöglicht.

Diese Aufgabe wird erfindungsgemäß durch den Gegenstand des Anspruchs 1 gelöst. Vorteilhafte Weiterbildungen sind Gegenstand der Unteransprüche.

Die Erfindung sieht vor, dass der Verdeckkastendeckel das abgelegte Verdeck nur teilweise abdeckt. Hierfür wird der Verdeckkastendeckel in Fahrtrichtung vor der Fahrzeugheckklappe angeordnet und weist dabei eine im Wesentlichen rechteckige Form auf, die in Richtung der Fahrzeugquerachse eine geringere Ausdehnung aufweist als das Verdeck.

Ist das Verdeck im Verdeckkasten abgelegt, so sind die einzelnen Verdeckteile so angeordnet, beziehungsweise gefaltet, dass beispielsweise das bei geschlossenem Verdeck in Fahrtrichtung vorderste Verdeckteil obenauf liegt. Bevorzugt ist dieses Verdeckteil so gestaltet, dass es direkt am Abschluss des Fahrgastraumes hinter den Rückenlehnen anschließt. Vorzugsweise ist dieser oben aufliegende Verdeckbereich ebenso zu den Seiten hin so gestaltet, dass er direkt an den Karosserieelementen seitlich des Verdeckkastens anschließt. Aufgrund dieser Gestaltung entfällt die Anforderung an den Verdeckkastendeckel, den Raum zwischen dem vorderen Verdeckteil und der Karosserie abzudecken.

Vorzugsweise schließt der Verdeckkastendeckel bei geöffnetem Verdeck, welches im Verdeckkasten abgelegt ist, in der Abdeckstellung an den oberen Verdeckbereich an. Dabei erstreckt er sich, in Fahrtrichtung gesehen, höchstens bis zum vorderen Drittel, insbesondere höchstens bis zur Hälfte, bevorzugt höchstens bis zum hinteren Drittel und besonders bevorzugt höchstens bis zum hinteren Viertel des oberen Verdeckbereichs.

Aufgrund des oben beschriebenen seitlich Anschlusses des vorderen Verdeckbereichs an die seitliche Karosserie ist es möglich, dass der Verdeckkastendeckel in Richtung der Fahrzeugquerachse eine geringere Ausdehnung aufweist als das Verdeck. Somit kann das Verdeck unabhängig breiter sein als die Karosserieöffnung, welche vom Verdeckkastendeckel abgedeckt wird. Vorzugsweise wird der Verdeckkasten in dem Bereich, in dem sich die breiteren Abschnitte des Verdecks beim Öffnen und Schließen in den Verdeckkasten bewegen, durch den oberen Verdeckbereich abgedeckt und ist somit unabhängig von der Gestaltung des Verdeckkastendeckels.

Der Verlauf der seitlichen Begrenzungen des Verdeckkastendeckels kann sich aufgrund der erfindungsgemäß erweiterten Gestaltungsmöglichkeiten am Karosseriedesign sowie an der Gestaltung des oberen Verdeckbereichs anlehnen. Vorzugsweise wird sie aufgrund des verringerten Bewegungs- Verriegelungs- und Bauaufwands eine im wesentlichen rechteckförmige Gestalt aufweisen. Ferner kann diese bevorzugt geradlinige Gestaltung beispielsweise seitlich in Fahrtrichtung nach vorne die Radien des Verdecks im geschlossenen Zustand miterfassen, was dann im geöffneten Zustand des Verdecks eine optische Anlehnung an eine klassische Persenning bewirkt.

Durch die erfindungsgemäße geringe Ausdehnung des Verdeckkastendeckels, und seiner bevorzugt im Wesentlichen rechteckigen Form kann der Verdeckkastendeckel auf relativ einfache Weise vorzugsweise vor der Heckklappe gelenkig direkt an der Karosserie angeordnet werden. Dies ermöglicht eine vergleichsweise sehr einfache Kinematik der gelenkigen Anbindung zum Öffnen und Schließen des Verdeckkastendeckels, welche bevorzugt verschiedene Öffnungsstellungen des Verdeckkastendeckels ermöglicht. Aufgrund der geringeren Kräfte, welche besonders durch den Fahrtwind auf diesen vergleichsweise kleinen Verdeckkastendeckel wirken, wird eine deutlich vereinfachte Kinematik der Verdeckklappenführung ermöglicht. Ebenso verringern sich die zum Antrieb des Verdeckkastendeckels erforderlichen Kräfte, welche beispielsweise mittels eines elektrischen und/ oder hydraulischen Antriebssystems aufgebracht werden können. Es ist ebenfalls möglich, den Verdeckkastendeckel zum Öffnen und Schließen direkt mechanisch mit der Kinematik des Verdecks zu koppeln. Ferner wird durch die vereinfachte Form des Verdeckkastendeckels sowie seine geringere Ausdehnung der Aufwand zur Verriegelung des Verdeckkastendeckels deutlich vermindert.

Bei geschlossenem Verdeck schließt der Verdeckkastendeckel bevorzugt direkt dicht auf Höhe der Karosserie hinten am Verdeck an und erfasst dabei bevorzugt auch die seitlichen Radien des Verdecks. Im vorderen Bereich des Verdeckkastens, welcher vom Verdeckkastendeckel nicht erreicht wird, ist das Verdeck in seiner geöffneten Stellung bevorzugt so gestaltet, dass es direkt an die Seiten des Verdeckkastens anschließt und dabei besonders bevorzugt direkt an die seitlich am Verdeckkasten anliegenden Karosserieteile reicht.

Weiterhin umfasst das Verdecksystem zu beiden Seiten des Fahrgastraums Gestängeklappen, welche in Fahrtzeuglängsrichtung gesehen, direkt hinter dem Türbereich anschließen und in der geöffneten Verdeckstellung einen Gestängeschenkel des Verdecks wenigstens teilweise abdecken und nach hinten an den dort angeordneten oberen Verdeckbereich anschließen. Beim Schließen des Verdecks wird eine solche Gestängeklappe, welche bevorzugt eine relativ geringe Erstreckung aufweist, vorzugsweise anhand einer relativ einfachen Kinematik nach oben geschwenkt, wobei sie beispielsweise so gestaltet sein kann, dass sie in der geschlossenen Verdeckstellung Gestängeteile zum Fahrgastraum hin abdeckt. Die Gestängeklappen können aber beispielsweise auch so ausgeführt sein, dass sie in der geschlossenen Verdeckstellung in den Verdeckkasten abgesenkt sind.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1A: eine schematische Schnittdarstellung durch den Verdeckkasten bei geschlossenem Verdeck und bei geschlossenem Verdeckkastendeckel,
- Fig. 1B: eine schematische Sicht von oben auf den Verdeckkasten bei geschlossenem Verdeck und geschlossenem Verdeckkastendeckel,
- Fig. 2A: eine schematische Schnittdarstellung durch den Verdeckkasten bei sich öffnendem Verdeck, wobei sich der Verdeckkastendeckel in einer Freigabestellung befindet,
- Fig. 2B: eine schematische Sicht von oben auf den Verdeckkasten bei sich öffnendem Verdeck, wobei sich der Verdeckkastendeckel in einer Freigabestellung befindet,
- Fig. 3A: eine schematische Schnittdarstellung durch den Verdeckkasten bei geöffnetem Verdeck und bei geschlossenem Verdeckkastendeckel,
- Fig. 3B: eine schematische Sicht von oben auf den Verdeckkasten bei geöffnetem Verdeck und geschlossenem Verdeckkastendeckel,
- Fig. 4: eine räumliche Ansicht eines Fahrzeugs mit erfindungsgemäßer Anordnung eines Verdeckkastendeckels mit geschlossenem Verdeck und
- Fig. 5: eine räumliche Ansicht eines Fahrzeugs mit erfindungsgemäßer Anordnung eines Verdeckkastendeckels mit geöffnetem Verdeck.

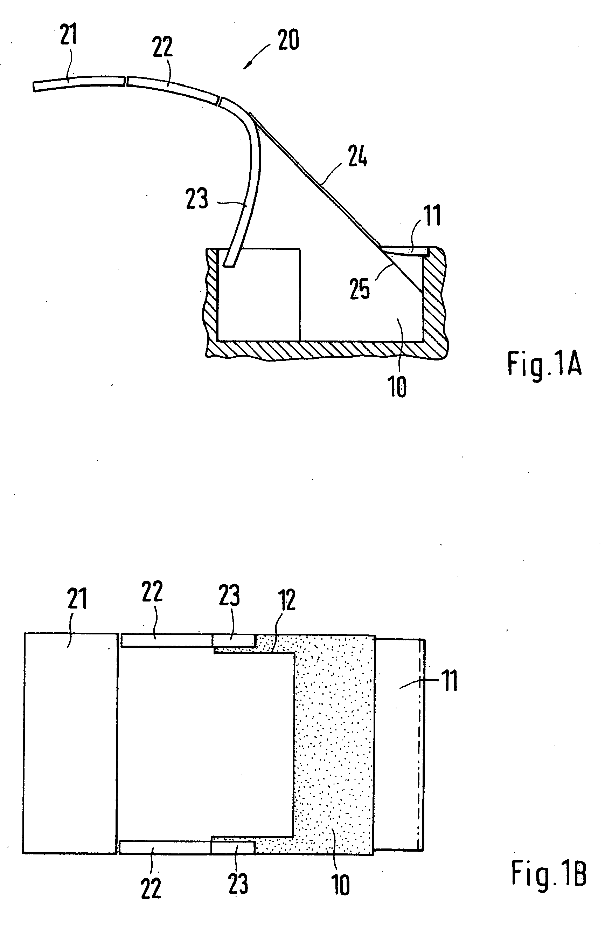

Figur 1A zeigt eine schematische Schnittdarstellung durch den Verdeckkasten 10 bei geschlossenem Verdeck 20 und geschlossenem Verdeckkastendeckel 11. Der Verdeckkasten 10 ist innerhalb der Fahrzeugkarosserie hinter den Rücksitzen des Fahrgastraums angeordnet. Das Verdeck 20 besteht in der beispielhaft dargestellten Ausführungsform aus einem vorderen Verdeckteil 21, einem mittleren Verdeckteil 22 und einem hinteren Verdeckteil 23. Die hintere Verdeckmembran 24, welche eine Heckscheibe umfasst, ist nach vorne hin am hinteren Verdeckteil 23 angeordnet und mittels eines Verbindungsmechanismus 25 im Verdeckkasten 10 befestigt. Der Verdeckkastendeckel 11 liegt bei geschlossenem Verdeck in Abdeckstellung direkt an der Verdeckmembran 24 an.

Fig. 1B zeigt eine schematische Sicht von oben auf den Verdeckkasten bei geschlossenem Verdeck und geschlossenem Verdeckkastendeckel. Dabei sind in Fig. 1B das vordere Verdeckteil 21 durchgängig gezeigt, vom mittleren Verdeckteil 22 und hinteren Verdeckteil 23 sind nur jeweils die seitlichen Gestängeteile schematisch dargestellt. Der Verdeckkastendeckel 11, der in Abdeckstellung dargestellt ist, weist eine geringere Breite auf, als das Verdeck 20. Die an den Verdeckkasten 10, den Verdeckkastendeckel 11 und an das Verdeck 20 anschließende Karosserie ist in den Figuren 1B bis 3B nicht dargestellt. In dieser Ansicht (Fig. 1 B) ist gut zu erkennen, dass sich der Verdeckkasten 10 zu beiden Seiten des Fahrgastraums nach vorne erstreckt, um die dort angeordneten Gestängeelemente des Verdecks 20 aufzunehmen.

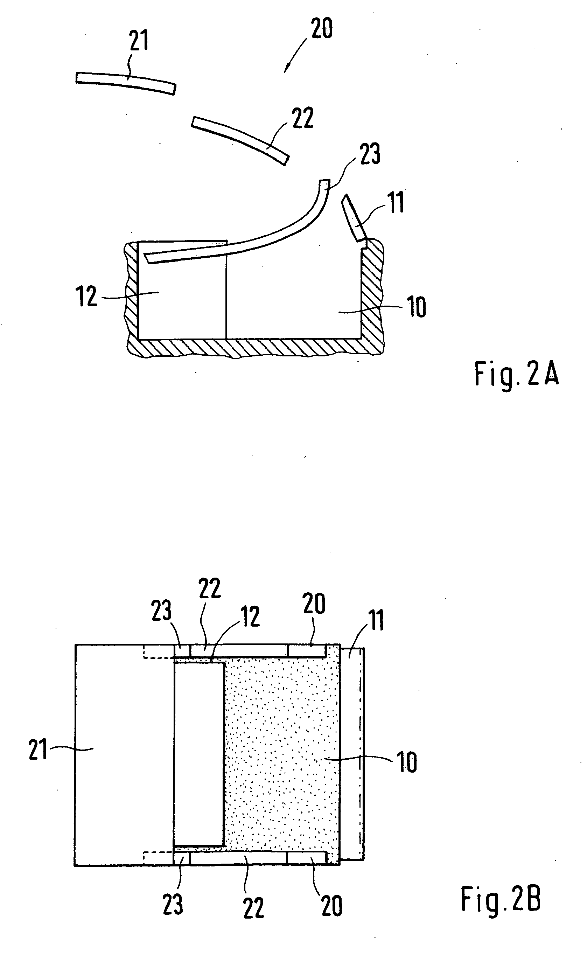

Fig. 2A zeigt eine schematische Schnittdarstellung durch den Verdeckkasten 10 bei sich öffnendem Verdeck 20. Der Verdeckkastendeckel 11 befindet sich dabei in einer Freigabestellung. Es ist deutlich zu erkennen, dass sich das Gestänge des hinteren Verdeckteils 23 um einen Anlenkpunkt im seitlichen Verdeckkastenteil 12 dreht. Der Verdeckkastendeckel 11 ist dabei nur soweit geöffnet, dass das Verdeck 20 im Verdeckkasten 10 abgelegt werden kann. In der dargestellten Ausführungsform bewegen sich das vordere und das mittlere Verdeckteil 21 und 22 im Wesentlichen translatorisch in ihre Ablagestellung. Das vordere Verdeckteil 21 bildet dabei die obere Abdeckung des Verdecks.

Fig. 2B zeigt eine schematische Sicht von oben auf den Verdeckkasten bei sich öffnenden Verdeck, entsprechend der Verdeckstellung der Fig. 2A. Der Verdeckkastendeckel 11 befindet sich also in Freigabestellung, und das hintere Verdeckteil 23 bewegt sich rotatorisch, während sich das vordere und mittlere Verdeckteil 21 und 22 im Wesentlichen translatorisch bewegen. Es ist deutlich zu sehen, dass das Gestänge des hinteren Verdeckteils 23 im sich seitlich nach vorne erstreckenden Verdeckkastenteil 12 abgelegt wird, welcher vom vorderen Verdeckteil 21 in der Ablagestellung nicht abgedeckt wird.

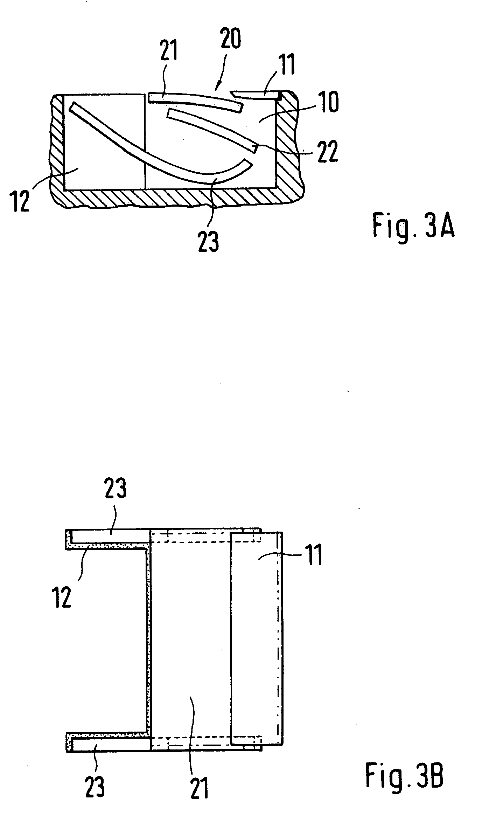

Fig. 3A zeigt eine schematische Schnittdarstellung durch den Verdeckkasten 10 bei geöffnetem Verdeck 20 und bei geschlossenem Verdeckkastendeckel 11. Das Verdeck 20 ist im Verdeckkasten 10 abgelegt. Den oberen Abschluss des Verdecks 20 bildet das vordere Verdeckteil 21, welches in Ablagestellung nach vorne an den Fahrgastraum anschließt. Der Verdeckkastendeckel 11 überlappt in Abdeckstellung den hinteren Bereich des vorderen Verdeckteils 21 und liegt mit einer, hier nicht dargestellten Dichteinrichtung auf dem vorderen Verdeckteil auf.

Fig. 3B zeigt eine schematische Sicht von oben auf den Verdeckkasten 10 bei geöffnetem Verdeck 20 und geschlossenem Verdeckkastendeckel 11. Von oben ist in dieser Position das vordere Verdeckteil 21 zu sehen, welches den Verdeckkasten 10 nach vorne an den Fahrgastraum und an der Seite zur Karosserie abschließt. Nach hinten schließt sich der Verdeckkastendeckel 11 an. In dieser Ansicht ist zu erkennen, dass in dieser geöffneten Position des Verdecks 20 der seitlich nach vorne reichende Verdeckkastenteil 12 mit dem sich darin befindlichen Gestänge nach oben nicht abgeschlossen ist. Für diesen Zweck dienen seitlich zum Fahrgastinnenraum hin angebrachte Gestängeklappen 15, welche in Fig. 3B nicht dargestellt sind.

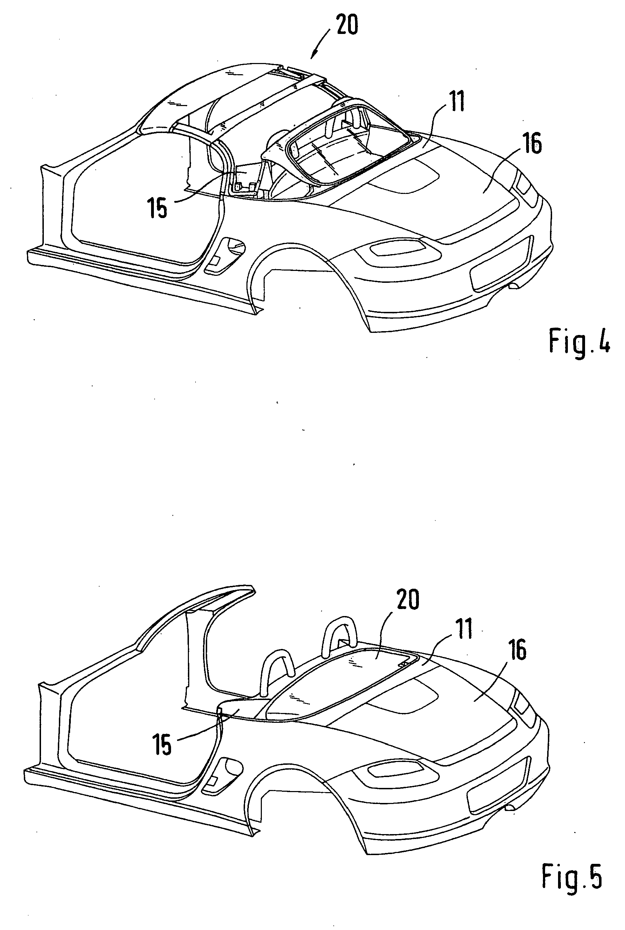

Die Fig. 4 und 5 zeigen jeweils eine räumliche Ansicht eines Fahrzeugs mit erfindungsgemäßer Anordnung eines Verdeckkastendeckels mit in Fig. 4 geschlossenem Verdeck und in Fig. 5 geöffnetem Verdeck. Dabei ist die Anordnung des Verdeckkastendeckels 11 vor der Heckklappe 16 gezeigt. Ebenso ist die Gestängeklappe 15 in geöffnetem und geschlossenem Zustand dargestellt.

## Patentansprüche

1. Anordnung eines Verdeckkastendeckels an einem Kraftfahrzeug, der einem heckseitigen Aufnahmeraum zur Unterbringung eines abgelegten Verdecks zugeordnet ist, wobei der Verdeckkastendeckel das abgelegte Verdeck teilweise abdeckt, **dadurch gekennzeichnet, dass** der Verdeckkastendeckel (11) vor einer Heckklappe angeordnet ist und in Richtung der Fahrzeugquerachse eine geringere Ausdehnung aufweist als das Verdeck (20).

2. Anordnung eines Verdeckkastendeckels nach Anspruch 0, **dadurch gekennzeichnet, dass** der Verdeckkastendeckel (11) in seinem hinteren Bereich gelenkig direkt an der Karosserie angeordnet ist.

3. Anordnung eines Verdeckkastendeckels nach mindestens einem der Ansprüche 0 oder 2, **dadurch gekennzeichnet, dass** der Verdeckkastendeckel (11) sich in der geöffneten Verdeckstellung höchstens bis zum vorderen Drittel, insbesondere höchstens bis zur Hälfte, bevorzugt höchstens bis zum hinteren Drittel und besonders bevorzugt höchstens bis zum hinteren Viertel des oberen Verdeckbereichs erstreckt.

4. Anordnung eines Verdeckkastendeckels nach einem der vorhergehenden Ansprüche, **dadurch gekennzeichnet, dass** der Verdeckkastendeckel (11) gelenkig so mit dem Fahrzeug verbunden ist, dass er aus der Abdeckstellung in eine Freigabestellung verlagerbar ist, in der ein Öffnen und Schließen des Verdecks (20) möglich ist.

5. Anordnung eines Verdeckkastendeckels nach Anspruch 4, **dadurch gekennzeichnet, dass** die Verlagerung des Verdeckkastendeckels (11) durch einen separaten, bevorzugt elektrischen und/ oder hydraulischen Antrieb bewirkt wird.

6. Anordnung eines Verdeckkastendeckels nach Anspruch 4, **dadurch gekennzeichnet, dass** der Verdeckkastendeckel (11) mechanisch mit dem Verdeck (20) gekoppelt ist.

7. Anordnung eines Verdeckkastendeckels nach einem der Ansprüche 4 bis 6, **dadurch gekennzeichnet, dass** der Verdeckkastendeckel (11) in der geöffneten und/ oder einer geschlossenen Verdeckstellung verriegelbar ist.

8. Anordnung eines Verdeckkastendeckels nach einem der vorhergehenden Ansprüche, **dadurch gekennzeichnet, dass** der Verdeckkastendeckel (11) in einer geschlossenen Verdeckstellung das Verdeck (20) teilweise abdeckt.

9. Anordnung eines Verdeckkastendeckels nach einem der vorhergehenden Ansprüche, **dadurch gekennzeichnet, dass** der Verdeckkastendeckel (11) dicht am Verdeck (20) anliegt, wenn er dieses teilweise abdeckt.

10. Anordnung eines Verdeckkastendeckels nach einem der vorhergehenden Ansprüche, **dadurch gekennzeichnet, dass** der Verdeckkastendeckel (11) einteilig ausgebildet ist.

11. Anordnung eines Verdeckkastendeckels nach einem der vorhergehenden Ansprüche, **dadurch gekennzeichnet, dass** der Verdeckkastendeckel (11) im Wesentlichen rechteckförmig ausgebildet ist.

12. Verdecksystem für ein Fahrzeug mit versenkbarem Verdeck, das ein erstes Verdeckteil umfasst, welches in einer geöffneten Stellung zuoberst in einer Verdeckaufnahme des Fahrzeugs abgelegt ist, umfassend einen Verdeckkastendeckel nach einem der vorhergehenden Ansprüche, **dadurch gekennzeichnet, dass** es weiter eine Gestängeklappe (15) umfasst, die in der geöffneten Verdeckstellung einen Gestängeschenkel des Verdecks (20) wenigstens teilweise abdeckt, der in der geöffneten Stellung über eine vordere Kante des ersten Verdeckteils (21) in Fahrzeugrichtung nach vorne hervorragt und gelenkig mit dem Fahrzeug verbunden ist.
